# EUROPÄISCHE PATENTANMELDUNG

(11) **EP 2 283 948 A1**
(43) Veröffentlichungstag der Anmeldung: **16.02.2011**
(21) Anmeldenummer: 10008528.1
(22) Anmeldetag: 16.08.2010
(51) Int. Cl.: B21F 45/06, B60J 10/00

(54) **Drahtgrundkörper mit nur dem Draht als Zugmittel**

(30) Priorität: 14.08.2009 DE 102009037601
(71) Anmelder: Rhodius GmbH, 91781 Weissenburg (DE)
(72) Erfinder: Kopetzky, Robert, 91207 Lauf (DE); Appel, Erwin, 91785 Pleinfeld (DE)
(74) Vertreter: Weigel, Matthias

(57) **Zusammenfassung**

Die Erfindung betrifft einen Drahtgrundkörper (1) zum Verstärken einer Dichtung aus elastischem Material, wie einer Türdichtung, wobei der Drahtgrundkörper (1) einen Draht (2) als längliches Element aufweist, der sich in Buchten (3) entlang einer Mittellängsachse (4) erstreckt, wobei der Drahtgrundkörper (1) an länglichen Elementen nur den einen Draht (2) aufweist, der so angeordnet ist, dass der Drahtgrundkörper (1) entlang der Mittellängsachse (4) wirkende Zugkräfte aufnehmen kann. Die Erfindung betrifft ferner eine Dichtung mit einem entsprechenden Drahtgrundkörper.

## Beschreibung

Die Erfindung betrifft einen Drahtgrundkörper zum Verstärken einer Dichtung aus elastischem Material, wie einer Türdichtung, wobei der Drahtgrundkörper einen Draht als längliches Element aufweist, der sich in Buchten entlang einer Mittellängsachse erstreckt.

Die Erfindung betrifft auch eine Dichtung mit einem Drahtgrundkörper, wobei die Dichtung insbesondere als Autotürdichtung bei einem Kraftfahrzeug, wie einem Pkw oder einem Lkw, Anwendung findet. Sie findet aber auch in der Luft- und Schifffahrt sowie bei öffentlichen Verkehrsmitteln, die auch schienengebunden sein können und bei Industriefahrzeugen Anwendung. Es ist ferner ein stationärer Einsatz in Gebäuden vorgesehen.

Unter "Draht" wird hier ein relativ dünnes, langes und biegsames Stück Metall mit beliebigem, vorzugsweise kreisförmigem, Querschnitt verstanden. Als Querschnittsformen des Drahtes werden dabei aber auch Rechtecksquerschnitte, wie sie bei Flachdrähten vorkommen, Polygonquerschnitte und elliptische Querschnitte umfasst. Die Drähte sind insbesondere aus Eisen, Kupfer, Messing, Aluminium, Silber, Gold oder Edelstahl sowie entsprechenden Legierungen bestehend. Insbesondere sind Legierungen mit Magnesium umfasst.

Bezüglich der Erfindung wird im Folgenden auch der Begriff "Zugmittel" verwendet. Unter Zugmittel werden sämtliche Elemente verstanden, die in der Längsrichtung zugfest ausgebildet sind. Dies umfasst Gewebebänder, Fasern, Filamente und Fäden einerseits, aber auch Drähte andererseits. Für diese Zugmittel bietet sich die Verwendung unterschiedlichster Materialien, wie Metalle und deren Legierungen, an. Allerdings sind auch bestimmte textile Materialien und Kunststoffmaterialien, etwa Aramidfasern und Kohlestofffasern, aber auch Glasfasern, geeignet. Aus dem Stand der Technik sind Drahtgrundkörper nach dem Oberbegriff von Anspruch 1 bekannt. Solche Drahtgrundkörper werden beispielsweise von der Firma Hope Global als Produkte unter der Markenbezeichnung "Form-A-Grip" vertrieben. Dabei sind die Zugmittel aus Fasern oder Drähten ausgebildet und im Wesentlichen äquidistant zueinander über die gesamte Breite des Drahtgrundkörpers verteilt.

Die Drahtgrundkörper, die als Verstärkung von Türdichtungen Verwendung finden, geben den Türdichtungen eine ausreichende Formsteifigkeit. Die entsprechenden Drahtgrundkörper sind nach Fertigstellung der Türdichtungen von dem elastischen Material, wie Gummi oder gummiähnlichem Kunststoff umgeben. Der Drahtgrundkörper bildet dabei ein sogenanntes Endoskelett und ist in die Türdichtung eingebettet. Eine weitere Gegendichtung greift in die, durch eine U- oder V-förmige Biegung gebildete, Nut dann ein, wenn die durch die Tür zu verschließende Öffnung abgedichtet ist.

Da die Türdichtung im Regelfall um die gesamte Außenkante der Tür umlaufend ausgestaltet ist, muss der Drahtgrundkörper mehrmals um eine Umformachse gebogen werden, wobei die Umformachse orthogonal zur Längsachse bzw. zur Biegeachse ausgerichtet ist.

Beim Biegen des Drahtgrundkörpers um die Umformachse treten Spannungen im Inneren des Drahtgrundkörpers auf. So befinden sich die Enden der Buchten auf einem gedachten ersten Kreis, der einen geringeren Radius aufweist, als der den Enden der Buchten gegenüberliegende Bereich. Das heißt, dass der den Buchten gegenüberliegende Bereich des Drahtgrundkörpers nach dem Umbiegen um die Umformachse auf einem gedachten Kreis liegt, nämlich einem zu dem ersten Kreis mit größerem Radius versehenen Kreis.

Im Stand der Technik werden durch die Zugmittel sowohl die Enden der Buchten als auch die von den Enden der Buchten beabstandeten Bereiche des Drahtgrundkörpers in ihrer Position direkt oder indirekt festgelegt.

Ein Ausbauchen des Drahtgrundkörpers ist leider häufig die Folge, wenn der U- oder V-förmige Vorformling um die Umformachse gebogen wird. Die dabei auftretenden Spannungen können so stark sein, dass der Drahtgrundkörper an einigen Stellen ausbeult oder sogar bricht. Dies beeinträchtigt dann die Formstabilität und Formsteifigkeit des Drahtgrundkörpers negativ. Dadurch verschlechtert sich auch die Formhaltigkeit der Türdichtung.

Aus dem Stand der Technik sind auch Alternativen zu solchen Drahtgrundkörpern bekannt, nämlich aus geschlitzten Blechen gefertigte Grundkörper, wobei von einem Verbindungssteg sich gegenüberliegende, von dem Verbindungssteg abstehende Laschen angeordnet sind. Die Laschen auf einer Seite des Verbindungsstegs sind zueinander äquidistant angeordnet.

Solche auch als geschlitzte Bleche bezeichneten Grundkörper sind um eine Biegeachse U-förmig gebogen ausgebildet, wobei die Biegeachse parallel zu einer Längsachse des Bleches im Bereich des Verbindungssteges angeordnet ist.

Die vorher beschriebenen Bruchprobleme, die mit einem Ausbauchen auf der Innenseite des Drahtgrundkörpers, also im Bereich der Enden der Buchten einhergehen, ist bei solchen geschlitzten Blechen nicht festzustellen, da die Enden der Laschen zueinander nicht festgelegt sind.

Allerdings sind solche geschlitzten Bleche in der Herstellung wesentlich teurer, als aus Draht gefertigte Grundkörper.

Es ist die Aufgabe der Erfindung einerseits einen Drahtgrundkörper zur Verfügung zu stellen, der einfach durch Extrusionsvorrichtungen oder andere den Drahtgrundkörper nachbearbeitende Vorrichtungen, ziehbar ist, ohne dass sich die Ausdehnung des Drahtgrundkörpers bedeutsam ändert und andererseits die Kosten für einen solchen Drahtgrundkörper niedrig zu halten. Dabei soll zusätzlich auch sichergestellt sein, dass bei mehrfachem Umbiegen des Drahtkörpers keine ungewünschten Spannungen im Drahtgrundkörper auftreten, die schlimmstenfalls sogar zu einem Faltenwurf am Drahtgrundkörper und/oder der Dichtung führen.

Diese Aufgabe wird erfindungsgemäß dadurch gelöst, dass der Drahtgrundkörper an länglichen Elementen nur den einen Draht aufweist, der so angeordnet ist, dass der Drahtgrundkörper entlang der Mittellängsachse wirkende Zugkräfte aufnehmen kann. Durch diese spezielle Anordnung wird es unnötig, zusätzliche Zugmittel in den Drahtgrundkörper einzubringen, mit Hilfe derer der Drahtgrundkörper gezogen wird. Solche Zugmittel erhöhen nämlich sonst nachteiligerweise das Gesamtgewicht und erschweren den Fertigungsprozess.

Die Aufgabe wird auch dadurch gelöst, dass eine Dichtung einen solchen Drahtgrundkörper aufweist.

Vorteilhafte Ausführungsbeispiele sind in den Unteransprüchen beansprucht und werden nachfolgend näher erläutert.

So ist es von Vorteil, wenn die Anordnung des einen Drahtes eine zusätzliche Aufnahme von Druckkräften in Richtung der Mittellängsachse ermöglicht. Zwar wird dann der Drahtgrundkörper in sich steif, ermöglicht jedoch auch einen flächenförmigen Einsatz. Wird die Anordnung so gewählt, dass gerade keine Druckkräfte in Richtung der Mittellängsachse aufnehmbar sind, so bietet sich eine solche Ausführungsform gerade bei mehrfach umgebogenen Drahtgrundkörpern an. Die beim mehrfachen Umbiegen entstehenden Spannungen werden dabei wirkungsvoll verhindert.

Wenn der Draht einen ersten Kontaktbereich aufweist, der mit einem zweiten Kontaktbereich desselben Drahtes in Verbindung steht, so wird an diesen Stellen eine Verknüpfung der Kontaktbereiche derart möglich, dass die Belastbarkeit des Drahtgrundkörpers durch Zugkräfte, die in Richtung der Mittellängsachse des Drahtgrundkörpers gerichtet sind, ermöglicht ist.

Es ist in einer besonderen Ausführungsform ferner von Vorteil, wenn der erste Kontaktbereich und der zweite Kontaktbereich in direkter Anlage miteinander befindlich sind.

Um eine Verbindung zwischen den zwei Kontaktbereichen zu ermöglichen, ist es von Vorteil, wenn die beiden Kontaktbereiche form-, stoff- und/oder kraftschlüssig miteinander verbunden sind. Diese Variante umfasst explizit auch, dass die Drahtabschnitte des einen Drahtes im Bereich der beiden Kontaktbereiche durch einen separaten Draht zusammengebunden sind.

Bewährt hat es sich auch, wenn die beiden Kontaktbereiche miteinander verschweißt oder verlötet sind. Auf diese Weise muss lediglich zwischen den beiden Kontaktbereichen ein Lotgut eingebracht werden oder die beiden Kontaktbereiche so hoch erhitzt werden, dass sich das Material des einen Drahtabschnittes im ersten Kontaktbereich mit dem Material des Drahtes im zweiten Kontaktbereich verfindet. Eine dauerhafte und beständige Verbindung ist die Folge. Auch bieten sich dabei Klebeverbindungen an.

Um eine gewisse Elastizität des Drahtgrundkörpers vorzuhalten, ist es auch von Vorteil, wenn zumindest einer der beiden Kontaktbereiche, vorzugsweise beide Kontaktbereiche, als Schlaufe ausgebildet ist/sind.

Wenn die beiden Kontaktbereiche maximal von der Mittellängsachse beabstandet sind, also im Außenbereich des Drahtgrundkörpers, gesehen von der Mittellängsachse aus, befindlich sind, so kann der Drahtgrundkörper durch von außen angreifende, die Verbindung herstellende Vorrichtungen, einfach verbunden werden. Der Prozess und die Anordnung der dazu notwendigen Vorrichtungen ist dann besonders einfach.

Als besonders vorteilhafte Verbindungsart hat sich herausgestellt, wenn der Draht Maschen nach Art eines Gestricks oder eines Gewebes aufweist. Auch Querschusseintragungen, die maschenbildend agieren, sind dabei von Vorteil.

Für die Verwendung in der Dichtung hat es sich auch als besonders vorteilhaft herausgestellt, wenn die Buchten mäanderförmig hintereinander angeordnet sind.

Wenn die Buchten eine im Wesentlichen einem Dreieck angenäherte Form aufweisen, so lassen sich besonders großflächige Drahtgrundkörper kreieren, wobei an den Ecken in einer Variante die Schlaufen mit den beiden Kontaktbereichen ausformbar sind.

Es ist ferner von besonderem Vorteil, wenn der Drahtgrundkörper um eine zur Mittellängsachse parallele Biegeachse V-förmig gebogen ist, oder wenn der Drahtgrundkörper um zwei zur Mittellängsachse parallel oder quer angeordnete Biegeachsen U-förmig gebogen ist. Die außen liegenden Bereiche des Drahtgrundkörpers, im besonderen die außerhalb der Biegeachse oder Biegeachsen gelegenen Bereiche, lassen sich auch einfach anplätten, um den sogenannten "hungry horse"-Effekt zu verhindern. Dieser "hungry horse"-Effekt tritt dann auf, wenn sich der Drahtgrundkörper durch das elastische Material der Dichtung abzeichnet. Bei entsprechenden Abplattungen drücken sich die einzelnen Drahtabschnitte des Drahtgrundkörpers nicht mehr sichtbar durch das elastische Material hindurch, so dass die Oberfläche des elastischen Materials der Dichtung durchgängig glatt aussieht. Das ästhetische Erscheinungsbild wird dadurch verbessert.

Um die Variabilität und die Einbaumöglichkeiten zu verbessern bzw. zu erhöhen, ist es von Vorteil, wenn der Drahtgrundkörper um eine orthogonal zur Biegeachse angeordnete Umformachse gebogen ist.

Wenn in den Kontaktbereichen Schlaufen ausgebildet sind, die miteinander verknüpft sind, so lässt sich ein besonders zugfestes Drahtgrundkörpergerüst erreichen, wobei trotzdem eine gewisse Längsdehnung und/oder Querdehnung erhalten bleibt.

Die Erfindung wird nachfolgend auch mit Hilfe einer Zeichnung näher erläutert. Es zeigen:
- Fig. 1: einen unverbogenen Drahtgrundkörper, der von der Firma Hope Global unter der Bezeichnung "Form-A-Grip" vertrieben wird,
- Fig. 2: einen unverbogenen, aus einem geschlitzten Blech gefertigten Grund- körper aus dem Stand der Technik,
- Fig. 3: eine Variante eines verbogenen Drahtgrundkörpers,
- Fig. 4: einen zu einem Vorformling gebogenen Drahtgrundkörper aus Fig. 3 in perspektivischer Ansicht,
- Fig. 5: einen um die Umformachse nochmals umgebogenen Vorformling aus Fig. 4,
- Fig. 6: eine Variante eines unverbogenen Drahtgrundkörpers,
- Fig. 7: eine weitere Variante eines Drahtgrundkörpers im unverbogenen Zu- stand,
- Fig. 8: das in Fig. 7 als VIII gekennzeichnete Detail,
- Fig. 9: einen um eine Biegeachse U-förmig gebogenen Drahtgrundkörper, ba- sierend auf der Variante gemäß Fig. 7,
- Fig. 10: einen um die Biegeachse und die Umformachse gebogenen Draht- grundkörper, basierend auf der Variante gemäß Fig. 6,

- Fig. 11: eine erfindungsgemäße Ausgestaltung eines Drahtgrundkörpers im fla- chen, d.h. noch unverbogenen Zustand,
- Fig. 12: einen Detailausschnitt gemäß der Ausgestaltung nach Fig. 11,
- Fig. 13: eine zweite erfindungsgemäße Ausgestaltung eines Drahtgrundkörpers im flachen, noch unverbogenen Zustand,
- Fig. 14: eine Detailansicht eines Ausschnittes des Drahtgrundkörpers aus Fig. 13 und
- Fig. 15: eine weitere erfindungsgemäße Ausführungsform eines Drahtgrundkör- pers im zweifach umgebogenen Zustand.

Die Figuren sind lediglich schematischer Natur und dienen nur dem Verständnis der Erfindung. In allen Figuren werden für die gleichen Elemente dieselben Bezugszeichen verwendet.

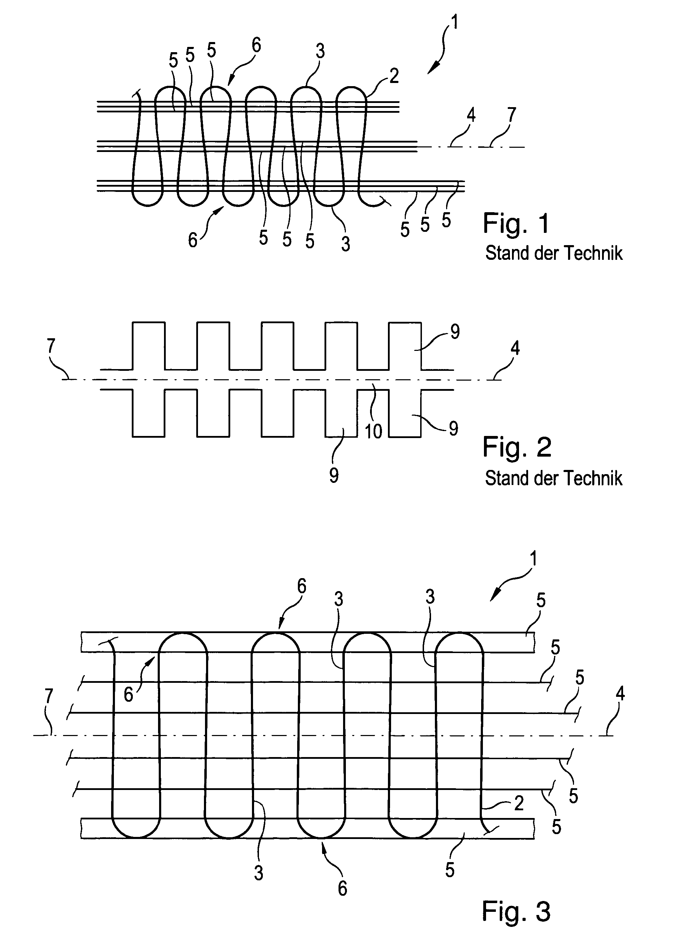

In Fig. 1 ist ein Drahtgrundkörper 1 dargestellt. Der Drahtgrundkörper 1 weist einen Draht 2 auf. Der Draht 2 erstreckt sich in mäanderförmigen Buchten 3 entlang einer Längsachse 4 des Drahtgrundkörpers 1. Mehrere Zugmittel erstrecken sich parallel zur Mittellängsachse 4 über dem Draht 2 und/oder unter diesem. Insgesamt sind neun Zugmittel 5 dargestellt, die sowohl um die Mittellängsachse 4 herum angeordnet sind, als auch an Endbereichen 6 der Buchten 3 mit dem Draht verbunden sind. Die Zugmittel 5 und der Draht 2 sind miteinander in Kontakt.

Die Zugmittel 5 können aus demselben Material wie der Draht 2 bestehen, insbesondere aus metallischem Werkstoff. Allerdings ist es möglich, dass die Zugmittel 5 auch als Fäden oder Fasern aus Kunststoff, abweichend vom Draht 2 ausgebildet sind.

Der Drahtgrundkörper 1 aus Fig. 1 ist im flachen Zustand dargestellt und wird für den fertigen Zustand zweimal gebogen, nämlich einmal um eine Biegeachse 7, die immer parallel zur Mittellängsachse 4 ausgerichtet ist und im dargestellten Fall deckungsgleich mit dieser ist. Nachfolgend wird der dabei erreichte Vorformling um eine in Fig. 1 nicht dargestellte Umformachse 8 gebogen. Während der Drahtgrundkörper 1 nur um eine einzige Biegeachse 7, somit V-förmig, gebogen wird, ist es auch möglich, dass der Drahtgrundkörper 1 um zwei Biegeachsen 7, die parallel zur Mittellängsachse 4 angeordnet sind oder quer zu dieser angeordnet sind, in einem ersten Schritt gebogen wird und nachfolgend dann um die Umformachse 8 gebogen wird. In diesem Fall wird eine U-förmige Umbiegung erreicht.

Ein weiterer Grundkörper ist in Fig. 2 dargestellt. Dieser Grundkörper ist jedoch nicht aus Draht gebildet, sondern aus geschlitztem Blech. Das geschlitzte Blech weist Laschen 9 auf, die über einen Verbindungssteg 10 miteinander in Verbindung stehen. Der Verbindungssteg 10 beherbergt auch eine Mittellängsachse 4, zu der die Laschen 9 symmetrisch angeordnet sind.

Auch dieser Grundkörper ist noch im unverbogenem Zustand dargestellt und wird ebenfalls um eine einzige Biegeachse 7 V-förmig oder um zwei Biegeachsen 7 U-förmig zu einem Vorformling gebogen. Die Biegeachse 7 liegt deckungsgleich auf der Mittellängsachse 4.

In Fig. 3 ist eine weitere Variante dargestellt.

In Fig. 3 ist der noch flache, d.h. der unverbogene Drahtgrundkörper 1 dargestellt. Die außen, im Bereich der Ränder des Drahtgrundkörpers 1 vorhanden Zugmittel 5, sind besonders dick und fest ausgeführt. Auch die Verbindung zwischen diesen besonders dicken Zugmitteln 5 und dem Draht 2 ist besonders fest ausgebildet. In der dargestellten Variante sind diese außen liegenden Zugmittel 5 und der Draht 2 miteinander verschweißt. Alternativ bieten sich aber auch Verknüpfungstechniken an, z.B. Flechttechniken, Häkeltechniken oder Stricktechniken. Auch die Verwendung von Löt-, Schweiß- oder Klebeverbindungen ist denkbar.

Insbesondere bietet sich ein Rollnahtschweißverfahren an. Dadurch können die als Drähte ausgebildeten Zugmittel 5 an unterschiedlichen Stellen an einer Schlaufengeometrie vom Draht 2 fixiert werden. Auch eine Fixierung unter Einsatz eines Lasers ist von Vorteil, da dann eine Fertigung im Durchlaufverfahren erleichtert wird.

Werden Flachdrähte verwendet, ist dies vorteilhaft für einen bezüglich der Biegesteifigkeit optimierten Ausgestaltung.

Bei der in Fig. 3 dargestellten Variante ist der Draht 2 auf die äußersten beiden Zugmittel 5 aufgelegt und dann mit diesen verbunden. Dasselbe gilt für die innen liegenden Zugmittel 5. Es ist jedoch möglich, dass die Zugmittel 5 auf den Draht 2 gelegt sind und dann mit diesem verbunden werden. Auch ist ein wechselweises Anliegen eines Zugmittels 5 an der Ober- und eines anderen Zugmittels 5 an der Unterseite des Drahtes 2 möglich. Auch ist es möglich, dass die Zugmittel 5 alternierend abwechselnd über oder unter dem Draht 2 hindurchgeführt sind.

Bei besonders dicker Ausgestaltung der äußersten beiden Zugmittel 5 ist es auch möglich, dass diese beiden äußeren Zugmittel 5 den Draht umgreifen. Sämtliche Kombinationen dieser Varianten sind ebenfalls als offenbar anzusehen.

Wie der schematischen Figur zu entnehmen ist, sind die weiter innen liegenden Zugmittel 5, also jene Zugmittel 5, die zwischen den beiden äußersten Zugmitteln 5 liegen, und benachbart zu der Längsachse 4 bzw. Biegeachse 7 sind, kleiner als der Querschnitt der außen liegenden Zugmittel 5.

Die als zweite Drähte ausgeformten Zugmittel 5, welche an den Endbereichen 6 angebracht sind, sind in Fig. 3 gut zu erkennen.

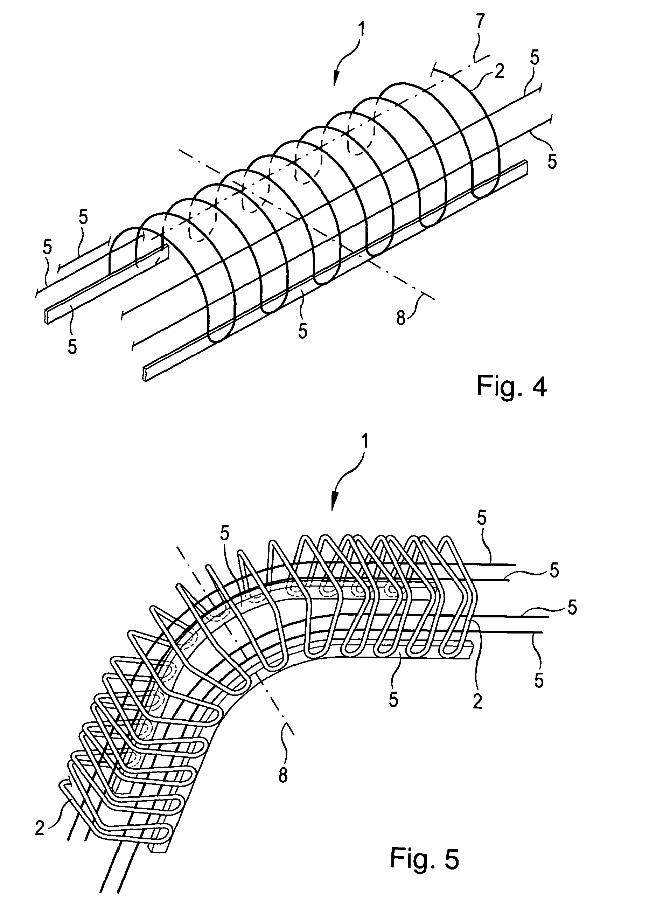

In Fig. 4 ist der um die Biegeachse 7 umgeformte Drahtgrundkörper, wie er ursprünglich in Fig. 3 ausgebildet war, dargestellt. Bei nur einer Biegeachse 7 ist die erreichte Umformung in etwa V-förmig, wohingegen bei zwei Biegeachsen 7 eine U-förmige Umformung erreicht ist.

Der Drahtgrundkörper 1 aus Fig. 4 ist nach einer nachfolgenden Umbiegung um die Umformachse 8 nochmals schematisch dargestellt. In der dann erreichten und in Fig. 5 dargestellten Form wird der Drahtgrundkörper 1 nachfolgend dann mit einem elastischen Material umgeben, um als Autotürdichtung oder sonst eine Dichtung zu dienen.

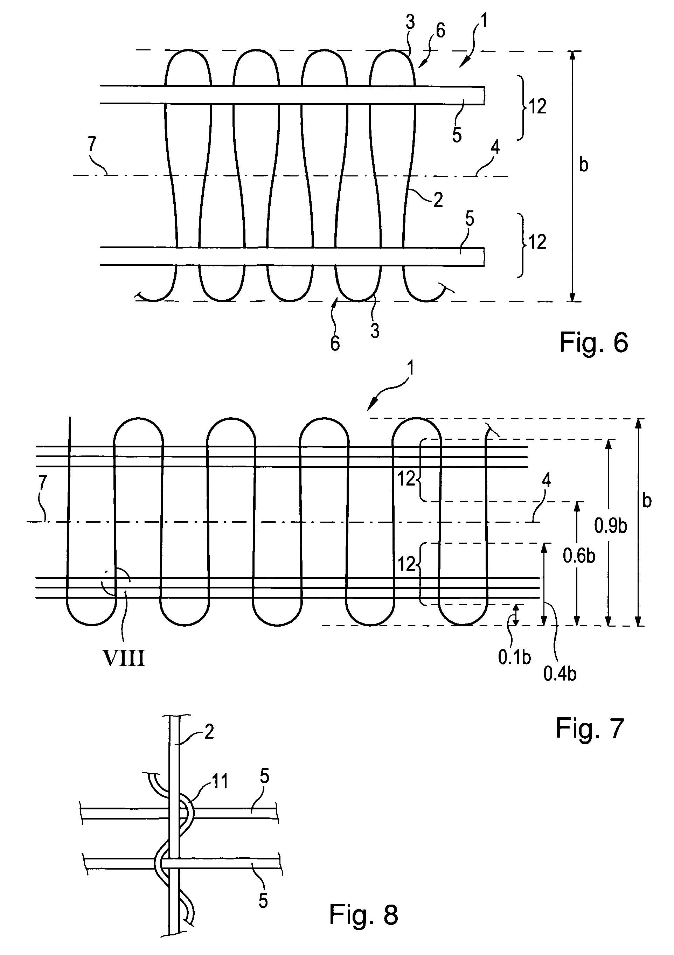

Der in Fig. 6 dargestellte Drahtgrundkörper 1 ist ebenfalls im unverbogenen Zustand dargestellt und weist eine Breite b auf, die durch die maximale Ausdehnung der Endbereiche 6 der Buchten 3 festgelegt ist. Der Draht 2 wird von zwei Zugmitteln 5 umschlossen. Die Zugmittel 5 können als zopfartige Drähte ausgebildet sein. Zur Verbindung des Drahtes 2 mit dem Zugmittel 5 bieten sich Strick- und/oder Häkeltechniken an. Zusätzlich ist es möglich, in den Berührungsbereichen des Drahtes 2 mit den Zugmitteln 5 Kleber einzubringen, insbesondere UVaushärtenden Kleber. Die Verwendung eines solchen Klebers bietet sich auch in anderen Varianten an, insbesondere in den nach den Fig. 7, 8 und 9 dargestellten Varianten.

In Fig. 7 ist diese weitere Variante eines Drahtgrundkörpers 1 dargestellt. Hier sind insgesamt sechs Zugmittel 5 vorhanden, die beanstandet zu der Biegeachse 7, die in den beiden Varianten der Fig. 6 und 7 deckungsgleich mit der Mittellängsachse 4 ist, angeordnet sind. Jeweils zwei Zugmittel 5 sind auf einer Seite der Biegeachse 7 angeordnet.

Der Detailabschnitt VIII ist in Fig. 8 näher dargestellt, wobei aus dieser Figur dann ersichtlich wird, dass eine als Draht ausgebildete Faser 11 für die Lagefestlegung des Drahtes 2 zu dem Zugmittel 5 zuständig ist. Die Faser 11 umgreift abwechselnd den Draht 2 und die Zugmittel 5.

Aus Fig. 6 und 7 ist auch die Anordnung eines Anbringbereiches beiderseits der Biegeachse 7 entnehmbar. Dieser Anbringbereich 12 ist zwischen 10 % und 40 % der Breite bzw. zwischen 60 % und 90 % der Breite b des Drahtgrundkörpers in unverbogenem Zustand angeordnet.

Auch in der Variante gemäß Fig. 6 ist der Anbringbereich 12 in einem vergleichbaren Abschnitt angeordnet, wie bei der Variante gemäß Fig. 7.

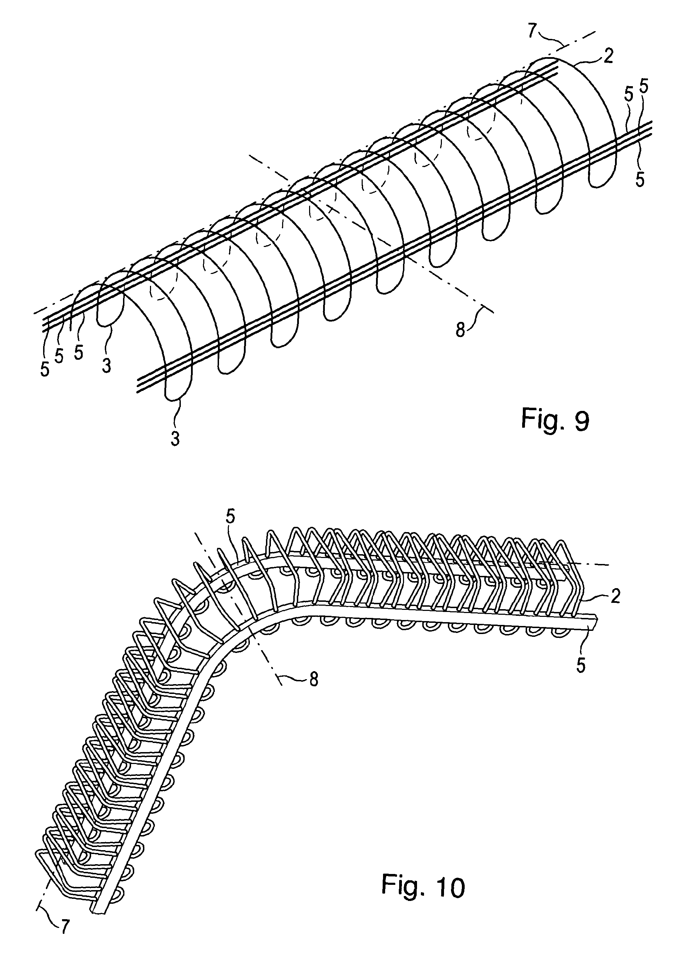

In Fig. 9 ist für beide Varianten exemplarisch eine U-förmige Ausformung des Drahtgrundkörpers 1 am Beispiel der zweiten Variante dargestellt. Allerdings ist nur eine der beiden Biegeachsen 7 dargestellt. Bei tatsächlich nur einer vorhandenen Biegeachse 7 wird eine V-förmige Ausformung erreicht. Aus Gründen der Übersichtlichkeit sind die hinteren Buchten 3 des Drahtes 2 nur gestrichelt dargestellt. Auch sind die hinten liegenden Zugmittel 5 nur abschnittsweise dargestellt.

In Fig. 10 ist der zweifach umgebogene Drahtgrundkörper der vorab erläuterten Variante mit verstärkten Zugmitteln im Außenbereich des Drahtgrundkörpers 1 dargestellt. Es ist gut zu erkennen, dass die beiden Zugmittel 5 in den Bereich einer neutralen Faser des zweifach umgebogenen Drahtgrundkörpers 1 gelegt sind.

Der fertig gestellte Drahtgrundkörper 1 wird an den Zugmitteln 5 zur Fertigstellung verbracht und dort dann von Gummi, Kautschuk oder ähnlichen Materialien umspritzt, um so die fertige Außentürdichtung zu bilden.

Als Materialien für den Draht 2 bietet sich Kohlenstoffstahl an. Ein solcher Draht 2 soll eine Zugfestigkeit von 700 bis 900 n/mm2 aufweisen, vorzugsweise 36 g/m wiegen und einen Durchmesser von 0,75 mm haben.

Drähte mit einem flachen Querschnitt und einer hohen Zugfestigkeit, die 4,5 g/m wiegen, bieten sich zur Verwendung als Zugmittel 5 oder als Fasern 11 an. Es ist jedoch auch möglich, dass sowohl für den Draht 2 als auch die Zugmittel 5 und/oder die Faser 11 dieselbe Drahtsorte verwendet wird.

Wenn in einer besonderen Variante die Zugmittel 5 ebenfalls als Drähte ausgebildet sind, wird der Draht 2 dann als erster Draht und das Zugmittel 5 als zweiter Draht zu bezeichnen sein. In dieser Variante werden zur Ortsfestlegung des ersten und zweiten Drahtes miteinander, als dritte Drähte ausgebildete Fasern 11 verwendet. Es bietet sich an, den Draht zu verzinken oder vorzugsweise unverzinkt zu verwenden, jedoch dann auf eine Ölbenetzung oder einen chemischen Korrosionsschutz zu achten.

Unterschiedliche Querschnitte, auch nur abschnittsweise variierende Querschnitte, haben sich ebenfalls als vorteilhaft herausgestellt, nämlich elliptische, polygonale, runde und rechteckförmige Querschnitte. Der Bereich, in dem sich die Drähte berühren, kann auch komprimiert ausgestaltet sein.

Bei der Herstellung bietet sich ferner an, auf Häkel- oder Strickmaschinen zurückzugreifen.

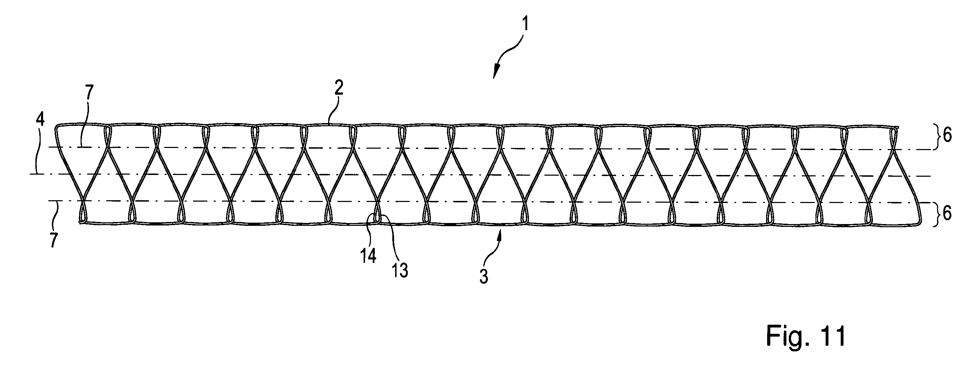

In Fig. 11 ist eine erfindungsgemäße Ausführungsform dargestellt. Dabei ist der Draht 2 in dreiecksförmigen Buchten 3 angeordnet. Die Buchten sind aneinander anschließend, entlang einer in Fig. 11 dargestellten Mittellängsachse 4, aneinandergereiht. Die Buchten 3 sind dabei so angeordnet, dass sich der Draht 2 mehrmals überkreuzt.

Die Ecken der Buchten 3, also die drei Ecken der annäherungsweise dreiecksförmigen Buchten 3, ragen in das Innere der jeweils anderen angrenzenden Bucht 3. An den Ecken jeder dreiecksförmigen Bucht 3 ist ein erster Kontaktbereich 13 vorhanden, der in direktem Kontakt mit einem zweiten Kontaktbereich 14 einer angrenzenden Bucht 3 steht.

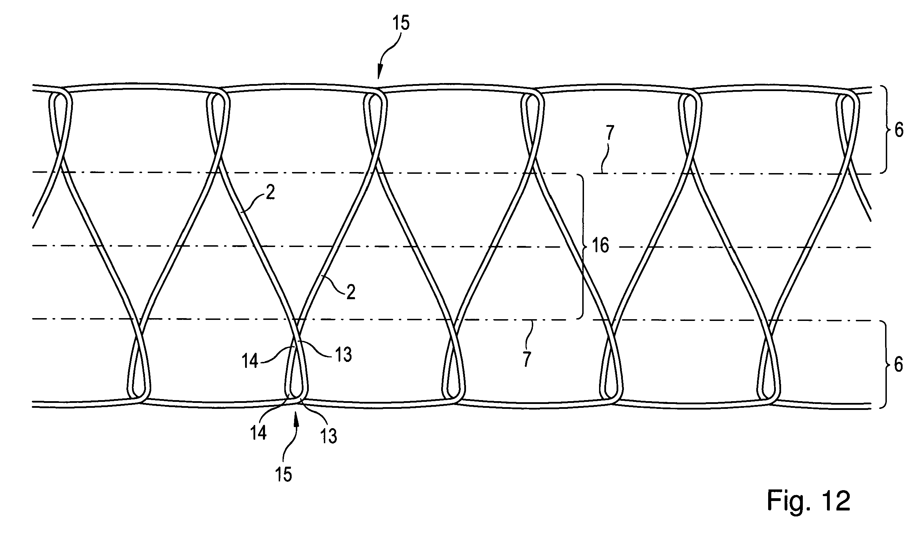

In Fig. 12 sind die miteinander in Kontakt liegenden Kontaktbereiche näher dargestellt. Dabei überkreuzt oder überdeckt der Draht 2, welcher eine erste Bucht 3 bildet, sich selbst im

Bereich einer zweiten Bucht 3. Dabei liegt der erste Kontaktbereich 13 über einem zweiten Kontaktbereich 14 an zwei unterschiedlichen Stellen.

In dem in den Fig. 11 und 12 dargestellten Ausführungsbeispiel sind der erste Kontaktbereich 13 und der zweite Kontaktbereich 14 miteinander verschweißt. Es ist jedoch auch möglich, Lot zwischen den Draht 2 einzubringen, so dass der erste Kontaktbereich 13 mit dem zweiten Kontaktbereich 14 verlötet ist.

Die beiden Kontaktbereiche 13 und 14 sind exemplarisch an einer Stelle des durch den Draht 2 gebildeten Drahtgrundkörpers 1 dargestellt. Hiernach sind diese beiden Kontaktbereiche an allen angedeuteten Ecken der Bucht 3, sowie alle nachfolgenden Buchten 3, vorhanden.

In den Fig. 11 und 12 sind zwei Biegeachsen 7 äquidistant zur Mittellängsachse 4 und parallel zu dieser dargestellt. Wird der Drahtgrundkörper 1 nun um jede der beiden Biegeachsen 7 je um 90° gebogen, so wird eine nahezu U-förmige Umbiegung erreicht.

Damit der sogenannte "hungry horse"-Effekt nicht auftritt, bietet es sich an, den Draht 2 außerhalb der beiden Biegeachsen 7 abzuplätten. Dies kann mittels üblicher Pressen kontinuierlich oder sequentiell erfolgen. Als Resultat ist der Draht 2 im Endbereich 6 dann abgeflacht und weist einen rechteckigen Querschnitt auf. Abweichend davon weist der Draht 2 im einem Mittelbereich 16 einen runden Querschnitt auf.

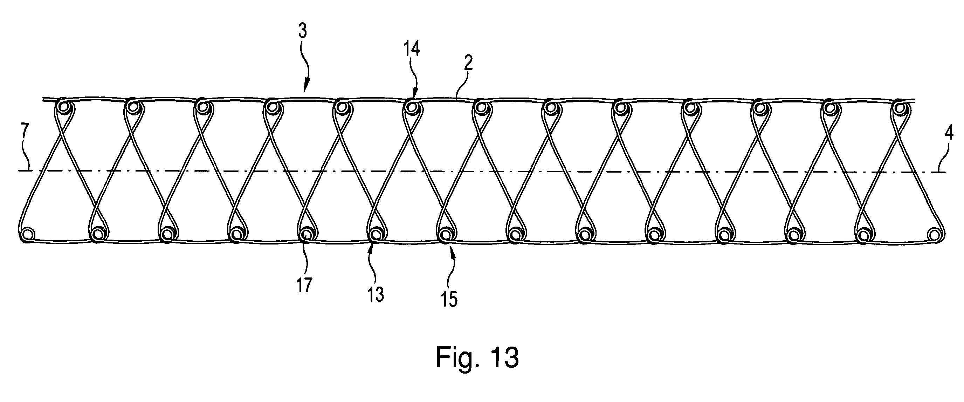

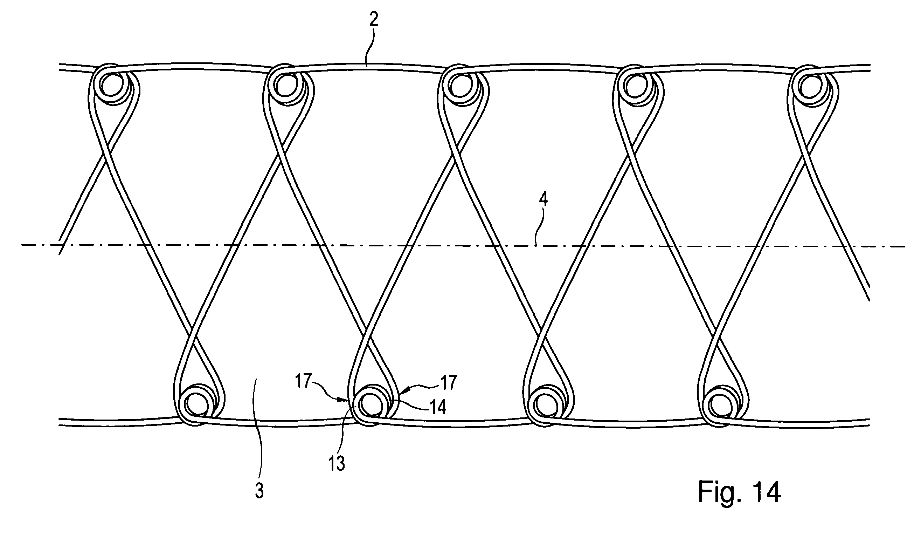

Um auf einer Länge von etwa 3 m auch eine zusätzlichen Dehnung von ca. 50 mm zu ermöglichen, was bei der Fertigung von Vorteil ist, ist bei der in den Fig. 13 und 14 dargestellten Ausführungsform im Bereich der Ecken 15 der Draht 2 so umgeformt, dass er Schlaufen 17 bildet.

Wie besonders gut in Fig. 14 zu erkennen, liegen dabei immer zwei Schlaufen übereinander. Dabei bildet die eine Schlaufe 17 den ersten Kontaktbereich 13 und die darüber oder darunter liegende Schlaufe 17 den zweiten Kontaktbereich 14.

Während in dem in Fig. 14 dargestellten Ausführungsbeispiel die Schlaufen 17 einer in Mittellängsachsenrichtung gesehen nachfolgenden Bucht 3 oberhalb einer vorhergehenden Schlaufe 17 liegt, kann dies auch genau anders herum angeordnet sein oder alternierend.

Auch ist es möglich, dass die Schlaufen 17 auf der einen Seite der Mittellängsachse immer über und auf der anderen Seite untereinander angeordnet sind. Auch ist ein Alternieren relativ zur Mittellängsachse möglich, sowie jegliche Kombination.

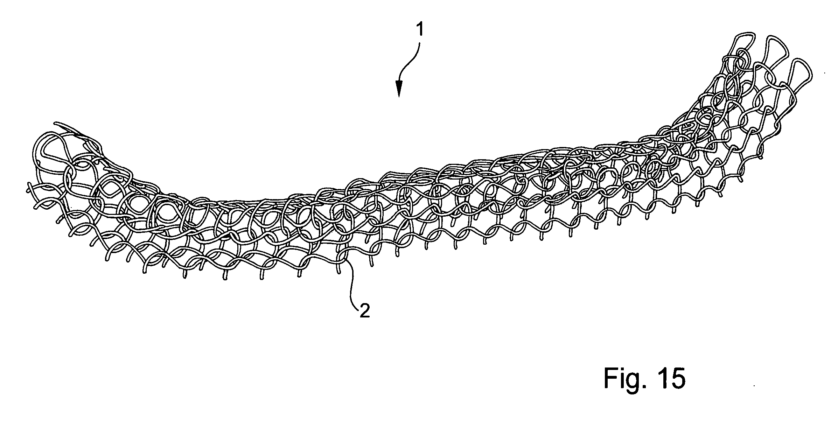

Eine erfindungsgemäße Weiterbildung ist in Fig. 15 dargestellt, wobei die Schlaufen 17 zu Maschen umgeformt sind, so dass der Draht 2 sie mehrfach umschlingt.

Aufgrund einer Abkappung des Drahtgrundkörpers sind zahlreiche lose Enden des Drahtes 2 erkennbar, was vorteilhafterweise in einer Variante jedoch vermieden wird.

Die einzelnen Aspekte der einzelnen Varianten sind in Verwirklichung des Erfindungsgedankens auch miteinander kombinierbar.

### Bezugszeichenliste:

- 1: Drahtgrundkörper
- 2: Draht
- 3: Bucht
- 4: Längsachse
- 5: Zugmittel
- 6: Endbereich
- 7: Biegeachse
- 8: Umformachse
- 9: Lasche
- 10: Verbindungssteg
- 11: Faser
- 12: Anbringbereich

## Patentansprüche

1. Drahtgrundkörper zum Verstärken einer Dichtung aus elastischem Material, wie einer Türdichtung, wobei der Drahtgrundkörper (1) einen Draht (2) als längliches Element aufweist, der sich in Buchten (3) entlang einer Mittellängsachse (4) erstreckt, **dadurch gekennzeichnet, dass** der Drahtgrundkörper (1) an länglichen Elementen nur den einen Draht (2) aufweist, der so angeordnet ist, dass der Drahtgrundkörper (1) entlang der Mittellängsachse (4) wirkende Zugkräfte aufnehmen kann.

2. Drahtgrundkörper nach Anspruch 1, **dadurch gekennzeichnet, dass** die Anordnung des einen Drahtes (2) eine zusätzliche Aufnahme von Druckkräften in Richtung der Mittellängsachse (4) ermöglicht.

3. Drahtgrundkörper nach einem der Ansprüche 1 oder 2, **dadurch gekennzeichnet, dass** der Draht (2) einen ersten Kontaktbereich (13) aufweist, der mit einem zweiten Kontaktbereich (14) desselben Drahtes (2) in Verbindung steht.

4. Drahtgrundkörper nach Anspruch 3, **dadurch gekennzeichnet, dass** der erste Kontaktbereich (13) und der zweite Kontaktbereich (14) in direkter Anlage miteinander befindlich sind.

5. Drahtgrundkörper nach Anspruch 3 oder 4, **dadurch gekennzeichnet, dass** die beiden Kontaktbereiche (13,14) form-, stoff- und/oder kraftschlüssig miteinander verbunden sind.

6. Drahtgrundkörper nach Anspruch 5, **dadurch gekennzeichnet, dass** die beiden Kontaktbereiche (13,14) miteinander verschweißt oder verlötet sind.

7. Drahtgrundkörper nach Anspruch 5, **dadurch gekennzeichnet, dass** zumindest einer der beiden Kontaktbereiche (13,14), vorzugsweise beide Kontaktbereiche (13,14), als Schlaufe (17) ausgebildet ist/sind.

8. Drahtgrundkörper nach einem der Ansprüche 3 bis 7, **dadurch gekennzeichnet, dass** die beiden Kontaktbereiche (13,14) maximal von der Mittellängsachse (4) beabstandet sind.

9. Drahtgrundkörper nach einem der Ansprüche 1 bis 8, **dadurch gekennzeichnet, dass** der Draht (2) Maschen nach Art eines Gestricks oder eines Gewebes aufweist.

10. Drahtgrundkörper nach einem der Ansprüche 1 bis 9, **dadurch gekennzeichnet, dass** die Buchten (3) mäanderförmig hintereinander angeordnet sind.

11. Drahtgrundkörper nach einem der Ansprüche 1 bis 9, **dadurch gekennzeichnet, dass** die Buchten (3) eine im Wesentlichen einem Dreieck angenäherte Form aufweisen.

12. Drahtgrundkörper nach einem der Ansprüche 1 bis 11, **dadurch gekennzeichnet, dass** der Drahtgrundkörper (1) um eine zur Mittellängsachse (4) parallele Biegeachse (7) V-förmig gebogen ist oder dass der Drahtgrundkörper (1) um zwei zur Mittellängsachse (4) parallel oder quer angeordnet Biegeachsen (7) U-förmig gebogen ist.

13. Drahtgrundkörper nach einem der Ansprüche 1 bis 12, **dadurch gekennzeichnet, dass** der Drahtgrundkörper (1) um eine orthogonal zur Biegeachse (7) angeordnete Umformachse (8) gebogen ist.

14. Drahtgrundkörper nach einem der Ansprüche 3 bis 13, **dadurch gekennzeichnet, dass** in den Kontaktbereichen (13,14) Schlaufen (17) ausgebildet sind, die miteinander verknüpft sind.

15. Dichtung mit einem Drahtgrundkörper nach einem der Ansprüche 1 bis 14.
